# EUROPÄISCHE PATENTSCHRIFT

(11) **EP 1 058 981 B1**
(45) Veröffentlichungstag und Bekanntmachung des Hinweises auf die Patenterteilung: **02.05.2003**
(21) Anmeldenummer: 99908947.7
(22) Anmeldetag: 25.02.1999
(51) Int. Cl.: H04L 1/12

(54) **ANORDNUNG ZUM OPTIMIEREN DER DATENÜBERTRAGUNG ÜBER EINEN BIDIREKTIONALEN FUNKKANAL**
ARRANGEMENT FOR OPTIMIZING THE DATA TRANSMISSION OVER A BIDIRECTIONAL RADIO CHANNEL
SYSTEME POUR OPTIMISER LA TRANSMISSION DE DONNEES PAR L'INTERMEDIAIRE D'UN CANAL RADIO BIDIRECTIONNEL

(30) Priorität: 25.02.1998 DE 19807931
(43) Veröffentlichungstag der Anmeldung: 13.12.2000
(73) Patentinhaber: Rohde & Schwarz GmbH & Co. KG, D-81671 München (DE)
(72) Erfinder: DIRSCHEDL, Werner, D-81245 München (DE); RIEK, Rainer, D-85646 Neufarn (DE); GREINER, Günter, D-81669 München (DE)
(74) Vertreter: Körfer, Thomas, Dipl.-Phys.
(86) Internationale Anmeldenummer: EP9901220
(87) Internationale Veröffentlichungsnummer: WO99044325

(56) Entgegenhaltungen:
- EP-A- 0 218 448
- EP-A- 0 730 356
- EP-A- 0 905 939
- US-A- 5 027 348
- US-A- 5 251 209
- US-A- 5 513 213

## Beschreibung

Die Erfindung betrifft und geht aus von einem Verfahren laut Oberbegriff des Hauptanspruches.

Zur Übertragung von digitalen Daten, wie digitalisierte Sprache oder andere digitale Informationen über einen in beiden Übertragungsrichtungen (bidirektionalen) Kurzwellen-Funkkanal ist es bekannt, die zu übertragenden digitalen Daten, die abwechselnd in Hin- und Rückrichtung (Simplex-Betrieb) über den Funkkanal übertragen werden, nach einem vorgegebenen Datenübertragungsprotokoll, im folgenden DÜP genannt, aufzubereiten und dabei in einzelne Datenpakete aufzuteilen (z.B. nach A.S. Tanenbaum, Computer Networks, Prentice-Hall, Englewood Cliffs, 1981, Seiten 136 ff; EP 0730 356). Dabei können diese zu übertragenden digitalen Daten auch schon vorher in einer höheren Ebene nach einem anderen Datenübertragungsprotokoll, im folgenden DÜPHE genannt, aufbereitet sein, beispielsweise nach dem bekannten TCP/IP (Transmission Control Protocol/Internet Protocol)-Protokoll. Zum Optimieren der Datenübertragung über einen solchen bidirektionalen Funkkanal wurde auch schon vorgeschlagen, die Bitfehlerrate empfangsseitig zu messen und an den Sender zurückzuübertragen und dort in Abhängigkeit davon u.a. die Länge der Datenpakete entsprechend zu ändern (ältere Patentanmeldung DE-196 51 593). Ferner ist es bekannt, bei einem im Duplex-Betrieb arbeitenden Datenübertragungssystem, das zwei getrennte Übertragungskanäle aufweist, in Abhängigkeit vom jeweiligen Datenaufkommen die Datenrate zu ändern, um so die Übertragung unempfindlicher gegen Störungen zu machen (US-Patent 5 513 213).

Bei einem Datenübertragungssystem beispielsweise nach dem CDMA-Verfahren, bei dem die zu sendenden Daten aus Datenpaketen variabler Länge bestehen, ist es bekannt, diese unterschiedlich langen Datenpakete mit Zusatzdaten aufzufüllen und so vor der Übertragung über die Funkstrecke in Datenpakete fester Länge umzusetzen (EP-A-0 730 356).

Je nach Art der zu übertragenden digitalen Daten und des diese aufbereitenden Datenübertragungsprotokolls der höheren Ebene, z.B. TCP/IP (DÜPHE), können die anfallenden Datenpakete und Quittungen in beiden Übertragungsrichtungen sehr unterschiedliche Länge und Häufigkeit aufweisen und es kann damit selbst bei Anwendung der erwähnten Optimierung der Datenübertragung mit dem DÜP zu erheblichen Beeinträchtigungen des Datendurchsatzes kommen.

Es ist daher Aufgabe der Erfindung, ein Verfahren zum Optimieren der Datenübertragung über einen bidirektionalen Funkkanal zu schaffen, bei dem die zur Verfügung stehende bidirektionale Kanalkapazität jeweils an die in beiden Richtungen anfallenden Datenaufkommen optimal angepaßt ist.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Gemäß der Erfindung werden vor der Aussendung der Datenpakete der DÜP die Datenpaketkennungen der DÜPHE, also die Anzahl und/oder Länge und/oder Priorität und/oder Art der Datenpakete ermittelt und in Abhängigkeit davon die Länge der Datenpakete der DÜP eingestellt. Dabei sind die verschiedenartigsten Kombinationsmöglichkeiten für diese Datenpaketkennungen denkbar. Im einfachsten Fall kann es ausreichen, nur die momentane bzw. zu erwartende Anzahl der Datenpakete zu ermitteln. Besser wird die Anpassung, wenn zusätzlich auch noch die momentane bzw. zu erwartende Länge der Datenpakete der zu übertragenden Daten als Kennung mit berücksichtigt wird. Noch besser ist es, auch noch die momentane bzw. zu erwartende Priorität der vom DÜPHE in das DÜP einlaufenden Datenpakete zu ermitteln bzw. die momentane bzw. zu erwartende Art (Information, Quittung, Steuerbefehle od.dgl.). Eine weitere Kennung kann die jeweilige Aktualität der Datenpakete der DÜPHE sein, beispielsweise die Information darüber, daß es sich um ein Wiederholungspaket handelt. Diese quantitative Erfassung der Datenpaketkennungen erfolgt auf beiden Seiten der Funkstrecke und aus diesen Kennungen kann dann die Länge der durch das Datenübertragungsprotokoll DÜP erzeugten Datenpakete im Sinne einer optimalen Nutzung der Funkkanalkapazität eingestellt werden und damit auch die Häufigkeit, mit der zwischen den beiden Richtungen des Funkkanals umgeschaltet wird.

Die Erfindung wird im folgenden anhand einer schematischen Zeichnung an einem Ausführungsbeispiel erläutert.

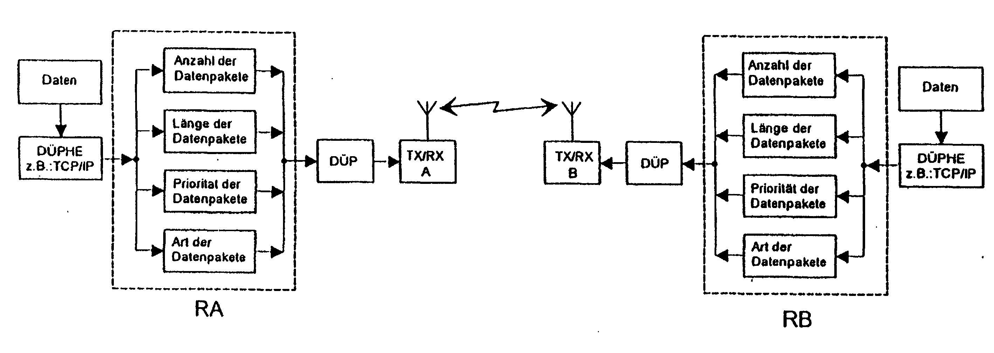

Die Figur zeigt das Prinzipschaltbild einer bidirektionalen Kurzwellenverbindung zwischen einer Sende/Empfangs-Station A und einer Sende/Empfangs-Station B. Die zu übertragenden digitalen Daten werden durch ein Datenübertragungsprotokoll (DÜPHE) z.B. TCP/IP in einzelne Pakete aufgeteilt, die nacheinander über einen Radiotreiber RA dem Datenübertragungsprotokoll DÜP des eigentlichen Senders der Station A zugeführt und über den Funkkanal zur Gegenstation B übertragen und im dortigen Empfänger mit dessen DÜP ausgewertet werden. Im Sendebetrieb der Gegenstation B werden in gleicher Weise die zu übertragenden digitalen Daten aufbereitet und über einen Radiotreiber RB dem DÜP des Senders der Station B zugeführt und über den Funkkanal zur Station A übertragen. Die jeweils von den DÜP erzeugten Pakete können sich beispielsweise aus einer variablen Anzahl von Rahmen zusammensetzen, die Anzahl der Rahmen pro Paket kann von der Güte der Funkverbindung abhängen und beispielsweise zwischen 1 und 15 liegen. Jeder Rahmen kann seinerseits aus einem beispielsweise 5 Byte langen Header aus Kontroll- und Steuerinformationen, einem anschließenden beispielsweise zwischen 4 und 250 Byte langem Datenanteil und einem beispielsweise 2 Byte langen Redundanzcode (CRC) bestehen. Durch Wahl der Datenmenge je Rahmen und Wahl der Anzahl der Rahmen in einem Paket kann somit senderseitig in jeder Station A und B die Paketlänge des DÜP beliebig, beispielsweise zwischen 64 Byte und 8 kByte gewählt werden.

Von den aus den DÜPHE in den Radiotreiber RA bzw. RB einlaufenden Datenpaketen wird nun die Anzahl, die Länge, die Priorität bzw. die Art (Kontroll- oder Steuerinformation, Dateninformation, Quittungen etc.) ermittelt und in Abhängigkeit von diesen Kenngrößen wird das Datenübertragungsprotokoll DÜP, mit dem die zu übertragenden Datenpakete vor ihrem Aussenden über den Sender der Station A noch einmal in einzelne Datenpakete aufgeteilt werden, entsprechend eingestellt. Wird beispielsweise in dem Radiotreiber RA eine Anzahl von zu übertragenden kurzen Datenpaketen von z.B. 100 Byte festgestellt, so wird die Länge der über das Datenübertragungsprotokoll DÜP erzeugten Datenpakete auf diese Länge eingestellt. Laufen in den Radiotreiber z.B. einige lange Pakete von beispielsweise einigen Kilobyte, so werden die Pakete DÜP so weit verlängert, wie es das Datenaufkommen der Gegenstation und die momentane Kanalqualität erlauben.

## Patentansprüche

1. Verfahren zur Übertragung von Daten über einen bidirektionalen Funkkanal zwischen zwei Sende/Empfangs-Stationen (A, B), bei dem die zu sendenden digitalen Daten, die nach einem ersten Datenübertragungsprotokoll (DÜPHE) in einzelne Datenpakete aufgeteilt sind, in den beiden Sende/Empfangs-Stationen des Funkkanals nach einem zweiten Datenübertragungsprotokoll (DÜP) in einzelne Datenpakete aufgeteilt werden, die abwechselnd in Hin- und Rückrichtung im Simplex-Verfahren über den Funkkanal übertragen werden,
**dadurch gekennzeichnet,**
**daß** in jeder Sende/Empfangs-station (A bzw. B)
die Anzahl
und/oder die Länge
und/oder die Priorität
und/oder die Art der durch das erste Datenübertragungsprotokoll (DÜPHE) erzeugten und dem jeweiligen Sender der Station zugeführten Datenpakete
als Datenpaketkennung bestimmt wird und in Abhängigkeit von diesen Datenpaketkennungen in mindestens einer der Sende/Empfangs-Stationen jeweils die Länge der durch das zweite Datenübertragungsprotokoll (DÜP) erzeugten Datenpakete eingestellt wird.

2. Verfahren nach Anspruch 1,
**dadurch gekennzeichnet,**
**daß** in der einen Sende/Empfangs-Station (z.B. A) die Datenpaketkennungen bestimmt werden und in Abhängigkeit davon die Datenpaketlänge in der gleichen Station bestimmt wird.

3. Verfahren nach Anspruch 1,
**dadurch gekennzeichnet,**
**daß** die in der einen Sende/Empfangs-Station (z.B. A) bestimmten Datenpaketkennungen zur Gegenstation (z.B. B) übertragen werden und dort zur Beeinflussung der Datenpaketlänge des zweiten Datenübertragungsprotokolls (DÜP) benutzt werden.

4. Verfahren nach einem der vorhergehenden Ansprüche,
**dadurch gekennzeichnet,**
**daß** die in den beiden Sende/Empfangs-Stationen (A und B) bestimmten Datenpaketkennungen zur jeweiligen Gegenstation übertragen werden und dort zur Einstellung der Datenpaketlänge des zweiten Datenübertragungsprotokolls benutzt werden.

## Claims

1. Process for transmission of data over a bidirectional radio channel between two transmitter/receiver stations (A, B) in which the digital data to be transmitted, divided according to a first data transmission protocol (DÜPHE) into individual data packets, are divided in the two transmitter/receiver stations of the radio channel according to a second data transmission protocol (DÜP) into individual data packets which are transmitted alternately in the two directions over the radio channel in a simplex process, **characterised in that** in each transmitter/receiver station (A or B), the number and/or the length and/or the priority and/or the nature of the data packets generated by the first data transmission protocol (DÜPHE) and supplied to the corresponding transmitter of the station are determined as data packet identifiers and in at least one of the transmitter/receiver stations the length of the data packet generated by the second data transmission protocol (DÜP) is set as a function of these data packet identifiers.

2. Process according to claim 1, **characterised in that** in the one transmitter/receiver station (e.g. A) the data packet identifiers are determined and as a function thereof the data packet length determined in the same station.

3. Process according to claim 1, **characterised in that** the data packet identifiers determined in the one transmitter/receiver station (e.g. A) are transmitted to the other station (e.g. B) and there used to influence the data packet length of the second data transmission protocol (DÜP).

4. Process according to any of the previous claims, **characterised in that** the data packet identifiers determined in the two transmitter/receiver stations (A and B) are transmitted to the other station in each case and there used to influence the data packet length of the second data transmission protocol.

## Revendications

1. Procédé de transmission de données par l'intermédiaire d'un canal radio bidirectionnel entre deux stations d'émission/de réception (A, B), dans lequel les données numériques à émettre, réparties en différents paquets de données selon un premier protocole de transmission de données (DÜPHE), sont réparties, dans les deux stations d'émission/de réception du canal radio, selon un second protocole de transmission de données (DÜP), en différents paquets de données qui sont transmis alternativement dans le sens aller et retour en mode simplex par l'intermédiaire du canal radio, **caractérisé en ce que**
dans chaque station d'émission/ de réception (A, respectivement B)
le nombre
et/ou la longueur
et/ou la priorité
et/ou la nature des paquets de données créés par le premier protocole de transmission de données (DÜPHE) et amenés à l'émetteur respectif de la station sont définis en tant qu'identification de paquet de données et **en ce que**, chaque fois, la longueur des paquets de données créés par le second protocole de transmission de données (DÜP) est ajustée en fonction de ces identifications de paquets de données dans au moins une des stations d'émission/ de réception.

2. Procédé selon la revendication 1 **caractérisé en ce que** les identifications de paquets de données sont définies dans l'une des stations d'émission/de réception (p. ex. A) et que, en fonction de cela, la longueur des paquets de données est définie dans la même station.

3. Procédé selon la revendication 1 **caractérisé en ce que** les identifications de paquets définis dans l'une des stations d'émission/ de réception (par. ex. A) sont transmises à la station correspondante (p. ex. B) où elles interviennent dans la définition de la longueur des paquets de données du second protocole de transmission de données (DÜP).

4. Procédé selon l'une quelconque des revendications précédentes, **caractérisé en ce que** les identifications de paquets de données définies dans les deux stations d'émission/ de réception (A et B) sont transmises à la station correspondante respective où elles interviennent dans la mise au point de la longueur des paquets de données du second protocole de transmission des données.
